(19) Europäisches Patentamt / European Patent Office / Office européen des brevets

(11) EP 3 069 441 B1

(12) FASCICULE DE BREVET EUROPEEN

(45) Date de publication et mention
de la délivrance du brevet:
**12.07.2017 Bulletin 2017/28**

(21) Numéro de dépôt: **14806018.9**

(22) Date de dépôt: **06.11.2014**

(51) Int Cl.:
**B60L 11/18** (2006.01)    **H02P 21/05** (2006.01)
**H02P 23/04** (2006.01)

(86) Numéro de dépôt international:
**PCT/FR2014/052834**

(87) Numéro de publication internationale:
**WO 2015/071576 (21.05.2015 Gazette 2015/20)**

(54) **PROCEDE ET SYSTEME DE COMMANDE D'UNE MACHINE ELECTRIQUE TRIPHASEE DE VEHICULE AUTOMOBILE ALIMENTEE PAR DES TENSIONS HACHEES**

VERFAHREN UND SYSTEM ZUR STEUERUNG EINES MIT GESCHNITTENEN SPANNUNGEN VERSORGTEN KRAFTFAHRZEUG-DREHSTROM-ELEKTROMOTORS

METHOD AND SYSTEM FOR CONTROLLING AN AUTOMOTIVE VEHICLE THREE-PHASE ELECTRIC MACHINE SUPPLIED VIA CHOPPED VOLTAGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361194**

(43) Date de publication de la demande:
**21.09.2016 Bulletin 2016/38**

(73) Titulaire: **Renault S.A.S.**
**92100 Boulogne-Billancourt (FR)**

(72) Inventeurs:
• **MALOUM, Abdelmalek**
  **F-94550 Chevilly La Rue (FR)**
• **NEGRE, Edouard**
  **F-78180 Montigny Le Bretonneux (FR)**

(56) Documents cités:
**EP-A1- 1 906 523        EP-A2- 1 944 861**
**EP-A2- 2 154 779        FR-A1- 2 973 607**
**US-A1- 2012 306 411**

**Description**

L'invention a pour domaine technique le contrôle d'une machine électrique pour véhicule automobile, et plus particulièrement le contrôle des oscillations de couple d'une telle machine.

Dans le cadre du développement des véhicules électriques, le couple fourni par le moteur électrique doit être contrôlé. Le couple d'une machine étant directement lié aux courants circulant dans celui-ci, il faut donc pouvoir contrôler de façon précise ces courants. Le moteur électrique à contrôler peut notamment être une machine synchrone triphasée à rotor bobiné.

Les courants dans les trois phases du stator sont sinusoïdaux et déphasés chacun de $2\pi/3$ rad. Ces courants créent un champ magnétique tournant dans la machine. Le rotor est parcouru par un courant continu ce qui crée un champ magnétique qui le rend équivalent à un aimant. Pour réaliser le couple mécanique, le champ magnétique statorique est piloté en quadrature, c'est-à-dire en déphasage piloté constant de 90° avec le champ rotorique. Ainsi la fréquence de rotation du champ du rotor est égale à la fréquence des courants du stator d'où le nom de « synchrone ». Ce sont les amplitudes des courants du stator et la valeur du courant du rotor qui crée le couple nécessaire à la rotation de la machine. Pour commander ces courants, il faudra donc appliquer entre les phases du stator des tensions sinusoïdales, chacune étant également déphasée de $2\pi/3$ rad et appliquer au rotor une tension constante.

Par ailleurs, on utilise la transformée de Park pour projeter les courants et les tensions du stator dans un espace où les signaux sinusoïdaux deviennent des constantes. Le repère de Park correspond à un repère lié au champ tournant donc lié au rotor dans le cas de la machine synchrone. L'utilisation de la transformée de Park permet d'avoir à réguler des constantes, ce qui est beaucoup plus facile à réaliser que de réguler des signaux sinusoïdaux.

L'enjeu est donc de réguler des courants constants en commandant des tensions constantes. En réalisant la transformée inverse, il est possible de se ramener au repère du stator de la machine et donc de connaître avec précision les tensions à appliquer sur chaque phase de la machine électrique.

Pour réguler les courants dans la machine, un correcteur est nécessaire car, il est connu qu'une machine triphasée alimentée avec des tensions hachées génère des oscillations de couple à certaines fréquences correspondant à des harmoniques de la fréquence électrique (fréquence de rotation du rotor de la machine).

Dans l'espace de Park, le système à commander est le suivant :

$$V_d = R_s I_d + L_d \dot{I}_d + M_f \dot{I}_f - \omega_r L_q I_q$$

$$V_q = R_s I_q + L_q \dot{I}_q + \omega_r \left( L_d I_d + M_f I_f \right) \qquad (Eq.\ 1)$$

$$V_f = R_f I_f + L_f \dot{I}_f + \alpha M_f \dot{I}_d$$

Avec :

$V_d$, $V_q$ et $V_f$ : respectivement la tension direct, la tension en quadrature et la tension du rotor (en Volt),
$I_d$, $I_q$ et $I_f$ : les courants circulant dans la machine sur les trois axes du plan de Park (en Ampère),
$\dot{I}_d$, $\dot{I}_q$ et $\dot{I}_f$ les dérivées des courants respectifs $I_d$, $I_q$ et $I_f$,
$R_s$ et $R_f$ : les résistances du stator et du rotor de la machine (en Ohm),
$L_d$, $L_q$ et $L_f$ : les inductances sur chaque axe de la machine (en Henry),
$M_f$ : l'inductance mutuelle entre le stator et le rotor (en Henry),
$\alpha$ : un terme constant issu de la transformée de Park (sans unité),
$\omega_r$ : la vitesse de rotation du champ magnétique de la machine (en rad/s),

Il est à noter que, s'agissant d'une machine synchrone, la vitesse de rotation $\omega_r$ du champ magnétique de la machine est égale à la vitesse de rotation du rotor multipliée par le nombre de paires de pôles de la machine.

Les tensions $V_d$ et $V_q$ sont créées avec un onduleur, la tension $V_f$ est créée avec un hacheur, ces deux systèmes étant alimentés par une batterie. Un hacheur découpe des tensions continues pour produire des tensions continues d'amplitude différente avec un rendement élevé. Lorsqu'un onduleur et un hacheur sont employés, les contraintes à respecter sont alors les suivantes :

$$\sqrt{V_d^2 + V_q^2} \le \frac{V_{bat}}{3} \quad et \qquad (Eq.\ 2)$$

$$- V_{bat} \leq V_f \leq V_{bat} \qquad\qquad (Eq.\ 3)$$

Avec $V_{bat}$ : la tension de la batterie qui alimente l'onduleur et le hacheur.

Toutefois, un tel système présente des oscillations de couple qui peuvent engendrer une divergence du régulateur de courant.

De l'état de la technique on connaît les documents suivants.

La demande de brevet FR2973607 vise à diminuer les oscillations de couple à la source. Toutefois, la puissance est calculée en termes de puissance à la batterie, ce qui génère des pertes de puissance. De plus, un tel calcul nécessite un capteur de courant supplémentaire pour mesurer le courant DC Par ailleurs, les nouvelles consignes de courants sont calculées à partir de la nouvelle consigne de couple.

Dans le document EP 1906523, les oscillations de couple sont éliminées en appliquant une tension $V_f$ aux bornes de l'inducteur. Il n'est décrit aucun traitement au niveau de la puissance centralisée ou décentralisée.

Le document EP 1944861 ne décrit aucun traitement au niveau des puissances. Néanmoins, une décentralisation du traitement de la compensation est décrite. En d'autres termes, l'axe direct d et l'axe en quadrature q sont traités séparément. Pour cela, il est décrit un calcul en temps réel d'un déphasage entre l'angle électrique du courant et l'angle électrique attendu pour compenser les oscillations de couple.

Il est donc décrit une forme de régulation anticipant sur les mesures de courant afin de produire des tensions compensant le phénomène oscillatoire du couple.

Il est également connu d'appliquer une correction dite : « anti-à-coups curatifs », dans laquelle on applique à la mesure de vitesse de la machine électrique un filtrage calculé à partir d'un modèle dynamique de la chaîne cinématique. Le signal ainsi traité représente une consigne de couple en déphasage par rapport aux oscillations de couple. Celle-ci est injectée dans la consigne de couple principale et réalise une atténuation des oscillations.

Toutefois, ces solutions ne permettent pas de réduire les oscillations « à la source », c'est-à-dire au niveau de la puissance électrique, et sur toute la gamme de vitesses de rotation.

Il existe donc un besoin d'un procédé de commande d'un moteur électrique permettant de réduire les harmoniques de couple liées à la topologie de la machine.

Un objet de l'invention est un procédé de commande d'une machine électrique triphasée de véhicule automobile alimentée par des tensions hachées et comprenant une étape de détermination de consignes de courant pour chaque phase de la machine électrique en fonction d'une requête de couple du conducteur, et une étape de détermination des tensions de chaque phase de la machine électrique en fonction des consignes de courant pour chaque phase. Par tensions hachées, on entend des tensions issues d'un hacheur permettant de modifier l'amplitude d'une tension d'entrée par découpage. Le procédé comprend les étapes suivantes au cours desquelles :

on détermine les puissances de chaque phase de la machine électrique exprimées dans le repère de Park,
on détermine si une mesure de la vitesse de rotation du champ magnétique dans la machine électrique dépasse une valeur de seuil, si tel est le cas, on réalise un filtrage passe-bande des puissances de chaque phase de la machine électrique,
on multiplie chaque puissance après filtrage par des gains calibrables pour obtenir des courants d'atténuation relatifs à chaque phase,
on détermine des consignes de courant finales en soustrayant les courants d'atténuation relatifs à chaque phase des consignes de courant des phases correspondantes, et
on détermine des consignes de tension d'alimentation des phases de la machine électrique en fonction des consignes de courant finales.

Le filtrage passe bande peut être réalisé pour une fréquence de coupure basse inférieure à la fréquence de rotation du champ magnétique à laquelle les oscillations sont observées et une fréquence de coupure haute supérieure à la fréquence de rotation du champ magnétique à laquelle les oscillations sont observées.

La machine électrique peut être synchrone ou asynchrone.

Le seuil de vitesse de rotation du champ magnétique est déterminé en fonction de la vitesse de rotation du champ magnétique à laquelle des oscillations de couple sont observées.

Un autre objet de l'invention est un système de commande d'une machine électrique triphasée de véhicule automobile alimentée par des tensions hachées, comprenant un moyen de détermination de consignes de courant de chaque phase de la machine électrique en fonction d'une requête de couple du conducteur, et un moyen de régulation des courants apte à déterminer des tensions de chaque phase de la machine électrique en fonction des consignes de courant pour chaque phase. Le système comprend un moyen de correction des oscillations de couple, apte à déterminer les puissances de chaque phase de la machine électrique exprimées dans le repère de Park, le moyen de correction étant également apte à déterminer si une mesure de la vitesse de rotation du champ magnétique dans la machine électrique dépasse une valeur de seuil, et à réaliser un filtrage passe bande des puissances de chaque phase de la machine électrique, et à déterminer des courants d'atténuation relatifs à chaque phase en fonction des puissances après filtrage, et des soustracteurs aptes à soustraire les courants d'atténuation relatifs à chaque phase des consignes de courant relatives aux phases correspondantes afin d'obtenir des consignes de courant finales, et apte à émettre les consignes de courant finales vers le moyen de régulation de la machine électrique.

Le filtrage passe bande peut être réalisé pour une fréquence de coupure basse inférieure à la fréquence de rotation du champ magnétique à laquelle les oscillations sont observées et une fréquence de coupure haute supérieure à la fréquence de rotation du champ magnétique à laquelle les oscillations sont observées.

Le seuil de vitesse de rotation du champ magnétique est déterminé en fonction de la vitesse de rotation du champ magnétique à laquelle des oscillations de couple sont observées.

La machine électrique peut être synchrone ou asynchrone.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments d'un système de commande selon l'invention, et
- la figure 2 illustre les principales étapes d'un procédé de commande selon l'invention.

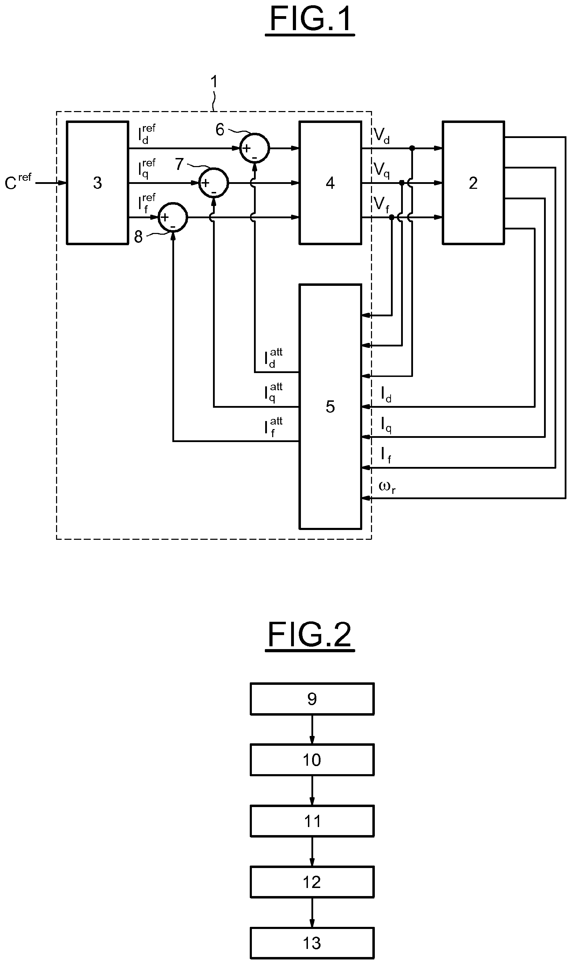

Le système de commande 1, illustré par la figure 1, d'une machine électrique 2 comprend un moyen de détermination 3 de consignes de courant relatives à chacune des phases de la machine électrique dans le repère (d,q,f) de Park en fonction de la requête de couple du conducteur $C^{ref}$.

Le système de commande 1 comprend un moyen de régulation 4 des courants dans les phases de machine électrique. Le moyen de régulation 4 détermine des tensions Vd,Vq,Vf d'alimentation de chacune des phases de la machine électrique en fonction des consignes de courant reçues en entrée.

Le système de commande 1 comprend également un moyen de correction 5 des oscillations de couple recevant en entrée les tensions $V_d, V_q, V_f$ d'alimentation de chacune des phases, des mesures des courants de chaque phase $I_d, I_q, I_f$ ainsi qu'une mesure de la vitesse de rotation $\omega_r$ du champ magnétique. Le moyen de correction 5 des oscillations de couple émet en sortie des courants d'atténuation $I_d^{att}$, $I_q^{att}$, $I_f^{att}$ des oscillations de couple relatifs à chaque phase.

Un premier soustracteur 6 réalise la soustraction entre la consigne de courant de la phase d et le courant d'atténuation correspondant. Il émet en sortie une consigne de courant finale relative à la phase d.

Un deuxième soustracteur 7 et un troisième soustracteur 8 réalisent des soustractions similaires sur les valeurs relatives respectivement à la phase q et à la phase f.

Ainsi, lors du démarrage du système, la consigne de courant de chaque phase est transmise sans modification au moyen de régulation 4 des courants. Toutefois, dès que des mesures des courants de chaque phase $I_d, I_q, I_f$ ainsi qu'une mesure de la vitesse de rotation $\omega_r$ du champ magnétique sont disponibles, les consignes de courant transmises au moyen de régulation 4 des courants sont les consignes de courant finales, permettant alors de réduire voire de supprimer les oscillations de couple.

Le procédé de commande d'une machine électrique permet d'apporter une correction dynamique des consignes de courant de manière à réduire l'amplitude des oscillations de couple.

Sur la figure 2, on peut voir que le procédé débute par une étape 9 de calcul des puissances de chaque phase, en appliquant les équations suivantes :

$$\begin{cases} P_d = V_d I_d - R_s I_d^2 \\ P_q = V_q I_q - R_s I_q^2 \\ P_f = V_f I_f - R_f I_f^2 \end{cases} \qquad (Eq.\ 3)$$

Avec

$P_d$ la puissance de la phase d,
$P_q$ la puissance de la phase q, et
$P_f$ la puissance de la phase f.

Au cours d'une deuxième étape 10, on détermine si la vitesse de rotation $\omega_r$ du champ magnétique dépasse une valeur de seuil. La valeur de seuil est déterminée en fonction d'essais précédents, au cours desquels des oscillations de couples sont observées. La valeur de seuil est alors fixée à une valeur égale à la vitesse de rotation du champ magnétique à laquelle les oscillations de couple ont été observées. On rappelle que vitesse de rotation et fréquence de rotation sont directement liées. Si tel est le cas, on applique un filtrage passe bande de chaque signal de puissance afin de n'extraire que les fréquences pertinentes. Le filtre passe bande est configuré avec une fréquence de coupure basse inférieure à la fréquence de rotation du champ magnétique à laquelle les oscillations sont observées et une fréquence de coupure haute supérieure à la fréquence de rotation du champ magnétique à laquelle les oscillations sont observées.

On obtient alors $P_d^{filt}$ la puissance de la phase d après filtrage, $P_q^{filt}$ la puissance de la phase q après filtrage, et $P_f^{filt}$ la puissance de la phase f après filtrage.

Au cours d'une troisième étape 11, on multiplie chaque puissance après filtrage par des gains calibrables pour obtenir les courants d'atténuation relatifs à chaque phase. Les équations suivantes permettent de déterminer ces courants :

$$\begin{cases} I_d^{att} = \alpha_d P_d^{filt} \\ I_q^{att} = \alpha_q P_q^{filt} \\ I_f^{att} = \alpha_f P_f^{filt} \end{cases} \qquad (Eq.\ 4)$$

Avec

$I_d^{att}$ : courant d'atténuation relatif à la phase d

$I_q^{att}$ : courant d'atténuation relatif à la phase q

$I_f^{att}$ : courant d'atténuation relatif au rotor f

$\alpha_d$ : gain calibrable relatif à la phase d

$\alpha_q$ : gain calibrable relatif à la phase q

$\alpha_f$ : gain calibrable relatif au rotor f

Au cours d'une quatrième étape 12, on soustrait les courants d'atténuation relatifs à chaque phase des consignes de courant relatives aux phases correspondantes et déterminées en fonction de la requête de couple du conducteur. Les équations suivantes permettent de déterminer les consignes de courants finales issues de la soustraction:

$$\begin{cases} I_d^{fin} = I_d^{ref} - I_d^{att} \\ I_q^{fin} = I_q^{ref} - I_q^{att} \\ I_f^{fin} = I_f^{ref} - I_f^{att} \end{cases} \qquad (Eq.\ 5)$$

Avec

$I_d^{fin}$ : consigne de courant finale relative à la phase d

$I_q^{fin}$ : consigne de courant finale relative à la phase q

$I_f^{fin}$ : consigne de courant finale relative au rotor f

$I_d^{ref}$ : consigne de courant relative à la phase d

$I_q^{ref}$ : consigne de courant relative à la phase q

$I_f^{ref}$ : consigne de courant relative au rotor f

Les consignes de courant finales sont alors émises vers le moyen de régulation (4) de la machine électrique au cours d'une cinquième étape 13.

Il est à noter que le système et le procédé de commande de la machine électrique permettant de réduire les oscillations de couple décrits ci-dessus peuvent s'appliquer à toutes machines électriques synchrones ou asynchrones.

**Revendications**

1. Procédé de commande d'une machine électrique (2) triphasée de véhicule automobile alimentée par des tensions hachées et comprenant une étape de détermination de consignes de courant pour chaque phase de la machine électrique (2) en fonction d'une requête de couple du conducteur, et une étape de détermination des tensions de chaque phase de la machine électrique (2) en fonction des consignes de courant pour chaque phase, **caractérisé par le fait qu'**il comprend les étapes suivantes au cours desquelles :

on détermine les puissances de chaque phase de la machine électrique exprimées dans le repère de Park,
on détermine si une mesure de la vitesse de rotation du champ magnétique dans la machine électrique (2) dépasse une valeur de seuil, si tel est le cas, on réalise un filtrage passe-bande des puissances de chaque phase de la machine électrique (2),
on multiplie chaque puissance après filtrage par des gains calibrables pour obtenir des courants d'atténuation relatifs à chaque phase,
on détermine des consignes de courant finales en soustrayant les courants d'atténuation relatifs à chaque phase des consignes de courant des phases correspondantes, et
on détermine des consignes de tension d'alimentation des phases de la machine électrique en fonction des consignes de courant finales.

2. Procédé selon la revendication précédente, dans lequel le filtrage passe bande est réalisé pour une fréquence de coupure basse inférieure à la fréquence de rotation du champ magnétique à laquelle les oscillations sont observées et une fréquence de coupure haute supérieure à la fréquence de rotation du champ magnétique à laquelle les oscillations sont observées.

3. Procédé selon l'une quelconque des revendications précédentes, dans lequel la machine électrique est synchrone ou asynchrone.

4. Procédé selon l'une quelconque des revendications précédentes, dans lequel le seuil de vitesse de rotation du champ magnétique est déterminé en fonction de la vitesse de rotation du champ magnétique à laquelle des oscillations de couple sont observées.

5. Système de commande d'une machine électrique (2) triphasée de véhicule automobile alimentée par des tensions hachées, comprenant un moyen de détermination (3) de consignes de courant de chaque phase de la machine électrique en fonction d'une requête de couple du conducteur,
et un moyen de régulation (4) des courants apte à déterminer des tensions de chaque phase de la machine électrique en fonction des consignes de courant pour chaque phase, **caractérisé par le fait qu'**il comprend un moyen de correction (5) des oscillations de couple, apte à déterminer les puissances de chaque phase de la machine électrique exprimées dans le repère de Park, le moyen de correction (5) étant également apte à déterminer si une mesure de la vitesse de rotation du champ magnétique dans la machine électrique dépasse une valeur de seuil, et à réaliser un filtrage passe bande des puissances de chaque phase de la machine électrique, et à déterminer des courants d'atténuation relatifs à chaque phase en fonction des puissances après filtrage, et des soustracteurs (6,7,8) aptes à soustraire les courants d'atténuation relatifs à chaque phase des consignes de courant relatives aux phases correspondantes afin d'obtenir des consignes de courant finales, et apte à émettre les consignes de courant finales vers le moyen de régulation (4) de la machine électrique.

6. Système selon la revendication 5, dans lequel le filtrage passe bande est réalisé pour une fréquence de coupure basse inférieure à la fréquence de rotation du champ magnétique à laquelle les oscillations sont observées et une fréquence de coupure haute supérieure à la fréquence de rotation du champ magnétique à laquelle les oscillations sont observées.

7. Système selon l'une quelconque des revendications 5 ou 6, dans lequel le seuil de vitesse de rotation du champ magnétique est déterminé en fonction de la vitesse de rotation du champ magnétique à laquelle des oscillations de couple sont observées.

8. Système selon l'une quelconque des revendications 5 à 7, dans lequel la machine électrique est synchrone ou asynchrone.

**Patentansprüche**

1. Verfahren zur Steuerung einer mit zerhackten Spannungen versorgten elektrischen Drehstrommaschine (2) eines Kraftfahrzeugs, welches einen Schritt der Bestimmung von Stromsollwerten für jede Phase der elektrischen Maschine (2) in Abhängigkeit von einer Drehmomentanforderung des Fahrers und einen Schritt der Bestimmung der Spannungen jeder Phase der elektrischen Maschine (2) in Abhängigkeit von den Stromsollwerten für jede Phase umfasst, **dadurch gekennzeichnet, dass** es die folgenden Schritte umfasst, in denen:

die Leistungen jeder Phase der elektrischen Maschine bestimmt werden, ausgedrückt im dq-Koordinatensystem,

bestimmt wird, ob ein Messwert der Drehzahl des Magnetfeldes in der elektrischen Maschine (2) einen Schwellenwert überschreitet, und wenn dies der Fall ist, eine Passbandfilterung der Leistungen jeder Phase der elektrischen Maschine (2) durchgeführt wird,

jede Leistung nach der Filterung jeweils mit einem kalibrierbaren Verstärkungsfaktor multipliziert wird, um Dämpfungsströme für die einzelnen Phasen zu erhalten,

endgültige Stromsollwerte bestimmt werden, indem die Dämpfungsströme für die einzelnen Phasen von den Stromsollwerten der entsprechenden Phasen subtrahiert werden, und

Versorgungsspannungs-Sollwerte der Phasen der elektrischen Maschine in Abhängigkeit von den endgültigen Stromsollwerten bestimmt werden.

2. Verfahren nach dem vorhergehenden Anspruch, wobei die Passbandfilterung für eine untere Grenzfrequenz durchgeführt wird, die niedriger als die Drehfrequenz des Magnetfeldes ist, bei welcher die Schwankungen beobachtet werden, und für eine obere Grenzfrequenz, die höher als die Drehfrequenz des Magnetfeldes ist, bei welcher die Schwankungen beobachtet werden.

3. Verfahren nach einem der vorhergehenden Ansprüche, wobei die elektrische Maschine eine Synchron- oder Asynchronmaschine ist.

4. Verfahren nach einem der vorhergehenden Ansprüche, wobei der Schwellenwert der Drehzahl des Magnetfeldes in Abhängigkeit von der Drehzahl des Magnetfeldes bestimmt wird, bei welcher Drehmomentschwankungen beobachtet werden.

5. System zur Steuerung einer mit zerhackten Spannungen versorgten elektrischen Drehstrommaschine (2) eines Kraftfahrzeugs, welches ein Mittel zur Bestimmung (3) von Stromsollwerten jeder Phase der elektrischen Maschine in Abhängigkeit von einer Drehmomentanforderung des Fahrers umfasst,
und ein Mittel zur Regelung (4) der Ströme, das geeignet ist, Spannungen jeder Phase der elektrischen Maschine in Abhängigkeit von den Stromsollwerten für jede Phase zu bestimmen, **dadurch gekennzeichnet, dass** es ein Mittel zur Korrektur (5) der Drehmomentschwankungen umfasst, das geeignet ist, die Leistungen jeder Phase der elektrischen Maschine, ausgedrückt im dq-Koordinatensystem, zu bestimmen, wobei das Mittel zur Korrektur (5) außerdem geeignet ist zu bestimmen, ob ein Messwert der Drehzahl des Magnetfeldes in der elektrischen Maschine einen Schwellenwert überschreitet, und eine Passbandfilterung der Leistungen jeder Phase der elektrischen Maschine durchzuführen und Dämpfungsströme für die einzelnen Phasen in Abhängigkeit von den Leistungen nach der Filterung zu bestimmen, sowie Subtrahierglieder (6, 7, 8), die geeignet sind, die Dämpfungsströme für die einzelnen Phasen von den Stromsollwerten für die entsprechenden Phasen zu subtrahieren, um endgültige Stromsollwerte zu erhalten, und geeignet, die endgültigen Stromsollwerte an das Mittel zur Regelung (4) der elektrischen Maschine zu senden.

6. System nach Anspruch 5, wobei die Passbandfilterung für eine untere Grenzfrequenz durchgeführt wird, die niedriger als die Drehfrequenz des Magnetfeldes ist, bei welcher die Schwankungen beobachtet werden, und für eine obere Grenzfrequenz, die höher als die Drehfrequenz des Magnetfeldes ist, bei welcher die Schwankungen beobachtet werden.

7. System nach einem der Ansprüche 5 oder 6, wobei der Schwellenwert der Drehzahl des Magnetfeldes in Abhängigkeit von der Drehzahl des Magnetfeldes bestimmt wird, bei welcher Drehmomentschwankungen beobachtet werden.

8. System nach einem der Ansprüche 5 bis 7, wobei die elektrische Maschine eine Synchron- oder Asynchronmaschine ist.

**Claims**

1.  Method for controlling a three-phase electric machine (2) of a motor vehicle powered by chopped voltages and comprising a step of determination of current setpoints for each phase of the electric machine (2) as a function of a torque request from the driver, and a step of determination of the voltages of each phase of the electric machine (2) as a function of the current setpoints for each phase, **characterized in that** it comprises the following steps during which:

    the powers of each phase of the electric machine are determined, expressed in the Park reference frame,
    a determination is made as to whether a measurement of the speed of rotation of the magnetic field in the electric machine (2) exceeds a threshold value, and, if it does, a bandpass filtering of the powers of each phase of the electric machine (2) is performed,
    each power after filtering is multiplied by gains that can be calibrated to obtain attenuation currents relative to each phase,
    final current setpoints are determined by subtracting the attenuation currents relative to each phase from the current setpoints of the corresponding phases, and
    power supply voltage setpoints for the phases of the electric machine are determined as a function of the final current setpoints.

2.  Method according to the preceding claim, in which the bandpass filtering is performed for a low cut-off frequency below the frequency of rotation of the magnetic field at which the oscillations are observed and a high cut-off frequency above the frequency of rotation of the magnetic field at which the oscillations are observed.

3.  Method according to either one of the preceding claims, in which the electric machine is synchronous or asynchronous.

4.  Method according to any one of the preceding claims, in which the rotation speed threshold of the magnetic field is determined as a function of the speed of rotation of the magnetic field at which torque oscillations are observed.

5.  System for controlling a three-phase electric machine (2) of a motor vehicle powered by chopped voltages, comprising a means (3) for determining current setpoints of each phase of the electric machine as a function of a torque request from the driver,
    and a means (4) for regulating the currents capable of determining voltages of each phase of the electric machine as a function of the current setpoints for each phase, **characterized in that** it comprises a means (5) for correcting the torque oscillations, capable of determining the powers of each phase of the electric machine expressed in the Park reference frame, the correction means (5) being also capable of determining whether a measurement of the speed of rotation of the magnetic field in the electric machine exceeds a threshold value, and of performing a bandpass filtering of the powers of each phase of the electric machine, and for determining attenuation currents relative to each phase as a function of the powers after filtering, and subtractors (6, 7, 8) capable of subtracting the attenuation currents relative to each phase from the current setpoints relative to the corresponding phases in order to obtain final current setpoints, and capable of sending the final current setpoints to the regulation means (4) of the electric machine.

6.  System according to Claim 5, in which the bandpass filtering is performed for a low cut-off frequency below the frequency of rotation of the magnetic field at which the oscillations are observed and a high cut-off frequency above the frequency of rotation of the magnetic field at which the oscillations are observed.

7.  System according to either one of Claims 5 and 6, in which the rotation speed threshold of the magnetic field is determined as a function of the speed of rotation of the magnetic field at which torque oscillations are observed.

8.  System according to any one of Claims 5 to 7, in which the electric machine is synchronous or asynchronous.

# FIG.1

# FIG.2

## RÉFÉRENCES CITÉES DANS LA DESCRIPTION

### Documents brevets cités dans la description

- FR 2973607
- EP 1906523 A
- EP 1944861 A